# EUROPÄISCHE PATENTSCHRIFT

(11) **EP 2 481 551 B1**
(45) Veröffentlichungstag und Bekanntmachung des Hinweises auf die Patenterteilung: **25.10.2017**
(21) Anmeldenummer: 12152613.1
(22) Anmeldetag: 26.01.2012
(51) Int. Cl.: B29C 47/10, B29B 15/10, B65G 15/16, B29C 31/00, B30B 15/00, D01G 15/00

(54) **Verfahren zur kontinuierlichen Dosierung von Stapelfasern an Schneckenmaschinen**
Method for continuous metering stapel fibres to screw machines
Procédé de dosage continu de fibres à empiler sur des machines à vis sans fin

(30) Priorität: 26.01.2011 DE 102011009519
(43) Veröffentlichungstag der Anmeldung: 01.08.2012
(73) Patentinhaber: Thüringisches Institut Für Textil- Und Kunststoff- Forschung E.V., 07407 Rudolstadt (DE)
(72) Erfinder: Frau Dr. Lützendorf, Renate, 07426 Königsee (DE); Herr Dr. Reussmann, Thomas, 07407 Rudolstadt (DE); Herr Ortlepp, Gerald, 07407 Uhlstädt (DE)
(74) Vertreter: Fritz, Edmund Lothar

(56) Entgegenhaltungen:
- EP-A2- 0 383 246
- EP-A2- 0 706 873
- EP-A2- 1 211 046
- AT-B- 307 012
- DE-A1- 19 712 440
- DE-A1-102007 014 694
- DE-A1-102007 047 548
- FR-A1- 2 850 606
- GB-A- 1 399 463
- US-A- 6 141 833
- CHSZANIECKI G ET AL: "STC ERGAENZT MT INNOVATIVE TECHNOLOGIE FUER LANGFASERVERSTAERKTE THERMOPLASTE", KUNSTOFFE INTERNATIONAL, CARL HANSER VERLAG, MUNCHEN, DE, Bd. 91, Nr. 12, 1. Dezember 2001 (2001-12-01), Seiten 30-33, XP001110751, ISSN: 0023-5563

## Beschreibung

Die Erfindung betrifft ein Verfahren zur kontinuierlichen Dosierung von endlich langen textilen Fasermaterialien an Schneckenmaschinen, bei dem aus den Fasern ein Gelege mit einer definierten Flächenmasse und Legebreite erzeugt wird, welches auf einem Transportband abgelegt und kontinuierlich einem Extruder zugeführt wird.
Bei der Herstellung von faserverstärkten Compounds oder auch der Direktverarbeitung von Langfasern (LFT-D-Verfahren) ist die kontinuierliche Dosierung des Fasermaterials von großer Bedeutung, da im laufenden Prozess ein konstanter Fasergehalt, eine homogene Faserverteilung in der Schmelze und eine gute Benetzung des Fasermaterials mit der Polymermatrix realisiert werden müssen. Das kann bisher nur mit definierten Aufmachungen des Fasermaterials (rieselfähiger Kurzschnitt oder Rovings) umgesetzt werden. Bei schwer rieselfähigen und voluminösen Fasermaterialien treten dagegen große Probleme auf (Brückenbildungen im Einzugstrichter, Masseschwankungen, ungleichmäßige Faserverteilung). Dadurch können Fasermaterialien wie z.B. voluminöse Synthesefasern oder auch Fasern aus Recyclingprozessen mit undefinierter Faserlängenverteilung (Recyclingglasfasern, recycelte Carbonfasern usw. bisher nicht kontinuierlich an Extrudern zudosiert werden.
Gegenwärtig wird die Dosierung von Fasermaterialien überwiegend mit konventionellen gravimetrischen Dosierwaagen realisiert. Das ist aber nur bei Verwendung von rieselfähigen Kurzschnittfasern möglich. Die Faserlänge der Schnittfasern liegt meist in einem Bereich von 3 bis 10 mm und ist nach oben durch die Geometrie der Einzugszone des Extruders begrenzt. Die Faserbündel sind mit Schlichte umhüllt und halten auch bei einer mechanischen Beanspruchung der Fasern durch die Schnecken des Dosieraggregates zusammen. Außerdem muss eine ausreichende Rieselfähigkeit für ein kontinuierliches Zudosieren gegeben sein. Das ist praktisch nur bei der Zuführung von relativ schweren Faserbündeln möglich. Für Fasermaterialien mit geringer Dichte und hohem Auflösungsgrad (starke Vereinzelung der Fasern) ist diese Methode nicht geeignet.

Eine andere bekannte Möglichkeit der Dosierung von Verstärkungsfasern ist der direkte Einzug von endlosen Fasersträngen in Schneckenmaschinen.

Beim Direkteinzug von Verstärkungsfaserrovings wird das Verstärkungsfasermaterial durch eine seitliche Öffnung der Schneckenmaschine zugeführt und im Plastifizierzylinder mit der Polymerschmelze vermischt. Dabei muss das Verstärkungsfasermaterial in der Schneckenmaschine sowohl definiert verkürzt, als auch mit der Polymerschmelze vermischt und homogenisiert werden. Das setzt in der Regel eine spezielle Maschinenkonfiguration voraus. Diese Variante der Faserdosierung erfordert allerdings endlose Verstärkungsfaserstränge (Rovings), die hohe Zugkräfte übertragen können, um einen kontinuierlichen Fasereinzug zu sichern. Das ist bei Verwendung von Neuware (Glasrovings oder Carbonfaserrovings) kein Problem. Bei Einsatz von endlich langen Fasern wie z.B. Naturfasern oder auch Glas- oder Carbon-Recyclingfasern ist das nicht möglich. Hier kann eine kontinuierliche Zuführung nur mit Hilfe von Faserbändern oder Fasergarnen erfolgen. Die Herstellung von Faserbändern oder Garnen mit hoher Zugfestigkeit ist allerdings sehr kostenaufwändig und auch nicht für alle Fasermaterialien möglich. Ein weiteres Problem ist die bei der Fasergarnherstellung aufgebrachte Drehung, die eine gute Auflösung und Vereinzelung der Fasern im Extruder behindert.

Es sind auch spezielle Lösungen zur kontinuierlichen Zuführung von Endlosfasern aber auch zur Dosierung von rieselfähigen Granulaten oder Fasern enthaltenden Schüttmaterialien vorgeschlagen worden. Diese Lösungsansätze sind allerdings für eine kontinuierliche Zuführung von voluminösen Stapelfasern nicht geeignet, da mit den bekannten Konstruktionen keine Vorverdichtung des Fasermaterials realisierbar ist. Auch bei bekannten Lösungen zur Dosierung von Recyclatchips ist es nicht möglich, Stapelfasern mit geringer Schüttdichte zu dosieren. Zusammenfassend kann geschlussfolgert werden, dass gegenwärtig mit den bekannten technischen Lösungen ausschließlich die Dosierung von Endlosfasern (Rovings) und gut rieselfähigen Kurzfasern, Granulaten oder Chips beherrscht wird.

Eine Möglichkeit zur kontinuierlichen Dosierung von endlich langen, voluminösen Fasern beschreibt das Patent DE 197 56 126. Bei diesem Verfahren werden zunächst mit Hilfe einer Krempelmaschine Hybridbänder aus einer Fasermischung von Verstärkungs- und Matrix-Stapelfasern hergestellt und in Kannen abgelegt. Dabei wird mit dem Mischungsverhältnis von Verstärkungs- und Matrixfasern der Fasergehalt eingestellt. Die Matrixfasern wirken in dem Faserband als Trägermaterial für die Verstärkungsfasern und ermöglichen so auch die Handhabung von schlecht rieselfähigen Verstärkungsfasern.

Der Füllvorgang bei Plastifizier- oder Spritzgießmaschinen erfolgt durch die Rotation der Schnecke, wodurch die Hybridbänder in den Zylinder eingezogen werden. Die Einzugsgeschwindigkeit und dosierte Menge des Materials kann durch die Schneckendrehzahl, sowie Anzahl und Gewicht der Hybridbänder gesteuert werden. Im beheizten Zylinder werden die thermoplastischen Matrixfasern bei den entsprechenden Verarbeitungstemperaturen aufgeschmolzen, so dass ein plastisch verformbarer, langfaserverstärkter Formstoff entsteht. Die Dosierung der Hybridbänder durch die Rotation der Schnecke erfolgt so lange, bis das gewünschte Dosiervolumen von plastischem Material in der Ausstoßkammer erreicht ist. Anschließend erfolgt durch eine Vorschubbewegung der Schnecke der Austrag des plastischen Materials in die Kavität des Werkzeuges zur Herstellung von faserverstärkten Kunststoffteilen. Nachteil bei dieser Variante der Faserdosierung ist allerdings die Herstellung der Faserbänder, die nicht für alle Fasermaterialien möglich ist und auch einen zusätzlichen kostenintensiven Arbeitsschritt darstellt. Außerdem sind die Zugfestigkeit und Dichte und das Gewicht der Faserbänder sehr gering, was einen stabilen Verarbeitungsprozess erschwert und die gleichzeitige Verarbeitung vieler Faserbänder erfordert. Das schränkt die praktische Anwendbarkeit dieses Verfahrens ein.

Als wesentliche Nachteile der bekannten Lösungen können somit folgende Punkte benannt werden:

Die Dosierung von Kurzschnitt mit konventionellen Dosierwaagen erfordert einen exakten Schnitt und eine gute Rieselfähigkeit der Kurzfaserbündel. Das ist vor allem bei Fasermaterialien mit geringer Dichte nicht gegeben.

In DE 10 2007 047 548 A1 wird eine Dosiereinrichtung für kurze Schnittfasern erläutert, die aus zwei gegenläufigen Bändern und mindestens einer Förderschnecke besteht. Die Bänder unterstützen den Transport, während die Schnecke, welche sich zwischen den Bändern befindet, das Fasermaterial fördern soll. Dieses Prinzip der Zuführung funktioniert nur bei vertikal angeordneten Zuführeinrichtungen. Eine Verdichtung ist nicht erwähnt und auch nicht beabsichtigt und es werden keinerlei Maßnahmen getroffen, um eine eventuelle Verdichtung durch die schräg zueinander stehenden Bandfördenivände beizubehalten und eine danach auftretende Aufweitung, wenn die Begrenzung wegfällt, zu verhindern. Diese Kombination ist für die Dosierung von langen Fasern (Faserlänge größer 10 mm) nicht geeignet, da sich die Fasern um die Förderschnecke wickeln können und somit zu einer Verstopfung der Dosiereinrichtung führen. Diese Art der Dosierung ist für nur für kurze Fasern geeignet, deren Schnittlänge deutlich kleiner als der Umfang der Dosierschnecke ist. Außerdem wird eine gewisse Rieselfähigkeit des Schüttgutes benötigt, um den Transport mit einer Förderschnecke zu ermöglichen. Das ist bei langen Fasern mit sehr geringer Schüttdichte nicht gegeben.
Beim Einzug von schlecht schütt- und rieselfähigen Materialien mit den bekannten Lösungen können sich Brücken bilden, die zu einer Verstopfung des Einzugs und auch zum unkontrollierten Austritt von Schmelze im Einzugsbereich führen.
Beim Einzug von endlosen Rovings wird das Fasermaterial von den Schnecken aufgewickelt und an speziellen Schneidkanten geschnitten oder gebrochen. Das funktioniert nur bei spröden Fasermaterialien wie Glas- oder Carbonfasern.
Werden hochfeste und zähe Fasermaterialien endlos als Roving eingezogen, kann es zur Blockade der Schnecken kommen, weil im Einzugsbereich des Extruders keine definierte Faserverkürzung erreicht werden kann.
Beim Direkteinzug ist durch die Aufwicklung der Rovings auf den Schnecken die Einzugsgeschwindigkeit des Fasermaterials direkt abhängig von der Schneckendrehzahl. Das schränkt die Variabilität bei der Einstellung des Fasergehaltes ein.
Beim Einzug von Faserbändern muss das voluminöse Fasermaterial entlüftet und in den Schneckengängen verdichtet werden. Das führt zu langen Dosierzeiten und geringen Durchsatzleistungen.
EP 1 211 046 A2 beschreibt ein gattungsgemäßes Verfahren mit dem Prinzip des Direkteinzugs von Fasermaterialien an Schneckenmaschinen. In dieser Patentschrift wird auch die Dosierung von Faservliesen oder Fasermatten erwähnt, die ein definiertes Flächengewicht und eine vorgegebene Breite haben. Nicht näher ausgeführt wird allerdings die Tatsache, dass diese Materialien eine bestimmte Mindestzugfestigkeit haben müssen, um von den Schnecken des Mischextruders aufgewickelt werden zu können. Das ist nur bei Rovings oder verfestigten Vliesen gegeben. Außerdem müssen die Vliese eine Dicke haben, die kleiner ist als die Schlitzbreite des Mischextruders, damit das Fasermaterial störungsfrei eingezogen werden kann. Das ist bei der Dosierung von nicht verfestigten Fasergelegen nicht der Fall. Unverfestigte Fasergelege haben eine sehr niedrige Zugfestigkeit, die praktisch nur durch Faser-Faser-Reibung erzeugt werden kann. Diese reicht nicht aus für einen abrissfreien und kontinuierlichen Einzug des Fasermaterials. Ein weiteres Problem bei Einzug von Gelegen aus Stapelfasern ist das große Volumen durch die niedrige Schüttdichte des Materials. Es ist in jedem Fall eine Vorverdichtung der Fasern erforderlich, um auf Schichtdicken zu kommen, die kleiner als die Schlitzbreite des Extruders sind. Dabei muss auch verhindert werden, dass das Fasermaterial nach der Vorverdichtung wieder expandiert. Ein kontinuierlicher Einzug von Fasergelegen ist deshalb mit der beschriebenen Vorrichtung nicht möglich. Die Druckschriften DE 10 2007 014 694 A1 und DE 10 2007 047 548 A1 offenbaren weitere Verfahren und Vorrichtungen zur kontinuierlichen Dosierung von Fasermaterialien. Ausgehend von dem zuvor genannten Stand der Technik liegt der vorliegenden Erfindung daher die Aufgabe zugrunde, die direkte Verarbeitung von endlich langen, schlecht rieselfähigen losen Fasermaterialien an konventionellen Schneckenmaschinen zu ermöglichen.

Erfindungsgemäß wird diese Aufgabe durch die Merkmale der Ansprüche 1 und 9 gelöst. Das erfindungsgemäße Verfahren eignet sich zur kontinuierlichen Zuführung von schwer dosierbaren Fasermaterialien an Schneckenmaschinen, wobei die Fasern durch eine Legevorrichtung zunächst in einer definierten Breite und Flächenmasse auf einem Transportband abgelegt und nachfolgend unter definierter Verdichtung kontinuierlich einem Extruder zugeführt werden.

Das Fasergelege ist kein eigenständiges, handhabbares Halbzeug (wie z.B. Band, Vlies o.a.), welches aus bekannten textilen Verarbeitungsstufen (Vliesherstellung und Kardierung) resultiert und wird nicht verfestigt. Fasergelege können sowohl mit Kurzfaser- als auch mit Langfaserdosiereinrichtungen erzeugt werden. Die Flächenmasse des Geleges ist in einem sehr weiten Bereich von 50 g/m² bis 5000 g/m² einstellbar und ermöglicht dadurch eine optimale Anpassung an den nachfolgenden Verarbeitungsprozess in der Schneckenmaschine.
Bevorzugt erfolgt bei dem erfindungsgemäßen Verfahren die Verdichtung des Geleges auf eine Dicke kleiner oder gleich 20 mm, bevorzugt kleiner gleich 10 mm. Erfindungsgemäß wird das verdichtete Gelege umgelenkt und eine nachfolgende Relaxation bzw. Expansion der Faserschicht wird verhindert.
Bevorzugt liegt die Breite des Geleges in einem Bereich von etwa 100 mm bis etwa 600 mm und die Flächenmasse des Geleges liegt bevorzugt in einem Bereich von etwa 50 g/m² bis etwa 5000 g/m².
Vorteilhaft ist es, wenn die Transportbänder eine raue Oberfläche zur Erhöhung der Reibung zwischen Fasergelege und Bandoberfläche haben.
Das erfindungsgemäße Gelege kann aus Naturfasern oder Chemiefasern und/oder anderen Faserstoffen auf organischer oder anorganischer Basis bestehen, insbesondere kann das Gelege beispielsweise aus recycelten Naturfasern oder Chemiefasern und/oder anderen Faserstoffen auf organischer oder anorganischer Basis bestehen.
Das erfindungsgemäße Gelege kann auch beispielsweise aus einer Mischung unterschiedlicher Fasern und auch pulverförmigen Bestandteilen bestehen.

Eine mögliche Variante der Erfindung sieht vor, dass wenigstens zwei Anordnungen von jeweils Doppelbändern mit je einem ersten unteren Transportband und je einem zweiten oberen Transportband vorhanden sind, wobei beide Anordnungen jeweils zum Transport und zur Verdichtung je eines Geleges vorgesehen sind und beide Gelege einem Extruder zugeführt werden, wobei beide Doppelbänder jeweils mit ihren Kopfseiten, an denen der Spaltabstand zwischen den beiden Transportbändern eines Doppelbandes am geringsten ist, einander zugewandt sind.
Fasergelege lassen sich mit konventionellen Speisern, Legern oder Streueinrichtungen erzeugen. Bei Stapelfasern mit Faserlängen größer als 10 mm werden in der Textilindustrie üblicherweise Speiser oder Leger zur Erzeugung einer gleichmäßigen Faservorlage eingesetzt. Bei Faserlängen unter 10 mm kommen meist Streueinrichtungen, wie sie beispielsweise aus der Verarbeitung von Holzfasern oder kurzen textilen Fasern bekannt sind, zum Einsatz. Die so erzeugten Gelege sind sehr voluminös und haben keinen Zusammenhalt der Fasern. Dadurch erfolgt die Dosierung derartiger Gelege an Schneckenmaschinen über eine spezielle Dosiereinrichtung.

Nachfolgend wird die vorliegende Erfindung anhand von Ausführungsbeispielen unter Bezugnahme auf die beiliegenden Zeichnungen näher beschrieben. Dabei zeigen:
Figur 1 eine erste beispielhafte Ausführungsform der Erfindung in schematisch vereinfachter Ansicht;
Figur 2 eine zweite alternative beispielhafte Ausführungsform der Erfindung in schematisch vereinfachter Ansicht;
Figur 3 eine dritte alternative beispielhafte Ausführungsform der Erfindung in schematisch vereinfachter Ansicht.

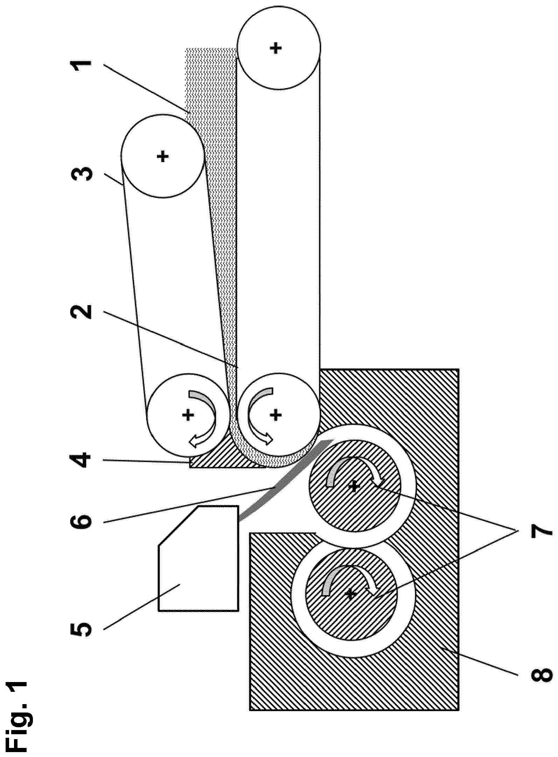

Zunächst wird auf Figur 1 Bezug genommen und anhand dieser ein erstes Ausführungsbeispiel der Erfindung näher erläutert. Das Fasergelege 1 wird auf einem ersten Transportband 2 abgelegt und kontinuierlich gefördert. Mit Hilfe eines zweiten Transportbandes 3 wird das Gelege gleichmäßig verdichtet und dem Extruder zugeführt. Durch die Verdichtung des Fasermaterials wird die Reibung zwischen den einzelnen Fasern des Geleges erhöht und somit ein ausreichender Zusammenhalt innerhalb des Geleges erzeugt. Die Verdichtung erfolgt bis auf eine Dicke des Geleges von kleiner oder gleich 20 mm, um einen Einzug des Fasermaterials am Extruder sicherzustellen. Mit Hilfe eines speziellen Leitbleches 4 wird das Fasermaterial nach dem Austritt aus den beiden Transportbändern umgelenkt und direkt in den Einzugsspalt des Extruders mit einer schlitzförmigen Einzugszone eingeführt. Das Leitblech ist empfehlenswert, um eine genaue Führung und Umlenkung des Fasermaterials zu ermöglichen und sicherzustellen, dass das Fasermaterial nach Verlassen des Doppelbandes nicht wieder expandiert und die Einzugsöffnung des Extruders verstopft.

Gleichzeitig wird mit Hilfe einer Breitschlitzdüse 5 ein Polymerfilm 6 erzeugt, der die gleiche Breite wie das Fasergelege hat. Im Einzugsbereich des Extruders werden der Schmelzefilm und das Fasermaterial zusammengeführt und kontinuierlich in den Extruder eingezogen. Durch diese Art der Dosierung wird eine homogene und gleichmäßige Mischung aus Fasermaterial und Schmelze im Extruder erreicht.
Im vorliegenden Ausführungsbeispiel weist das Extrudergehäuse 8 zwei gleichsinnig drehende Schnecken 7 auf.

Vorteil der Erfindung ist die Möglichkeit der kontinuierlichen Zuführung sowohl von schwer dosierbaren Kurzfasern als auch von langen Stapelfasern und die Entkopplung von Faserdosierung und Schneckendrehzahl. Durch die Geschwindigkeit des Transportbandes und die zudosierte Menge an Polymerschmelze lässt sich somit der Fasergehalt sehr genau einstellen und ein kontinuierlicher Produktionsprozess realisieren.

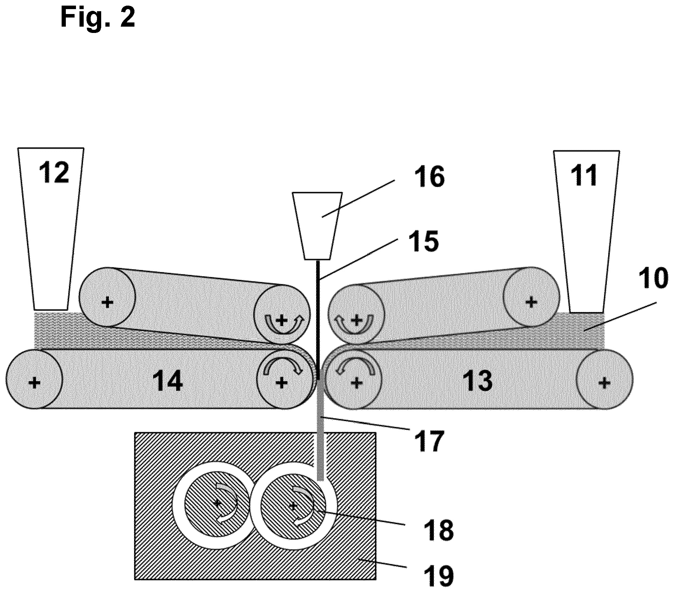

Nachfolgend wird auf Figur 2 Bezug genommen. In der dort gezeigten weiteren Ausführungsform ist es auch möglich, mit zwei Doppelbändern zu arbeiten und den Polymerfilm zwischen die beiden Lagen des Fasermaterials zu extrudieren. Bei dieser Art der Dosierung wird das Fasermaterial 10 von 2 Speisern 11 und 12 auf zwei Doppelbänder 13 und 14 gelegt und nachfolgend zusammengeführt. Die Polymerschmelze 15 wird über eine Breitschlitzdüse 16, deren Breite gleich der Breite des Fasergeleges entspricht, zwischen die beiden Fasergelege eingebracht. In dem Spalt zwischen den beiden Transportbändern durchdringt die Schmelze das Fasermaterial und es entsteht eine Faserbahn 17 mit einer Dicke kleiner als die Dicke des Einzugsschlitzes am Extruder und mit einer ausreichenden Zugfestigkeit, um das Faser/Polymergemisch in die Schnecken 18 des Extruders 19 einzuziehen. Gleichzeitig wird durch das Auftreffen des Polymerschmelzefilms eine Relaxation/Expansion des verdichteten Fasermaterials verhindert.

Durch die Dosierung der Schmelze zwischen die beiden Faserlagen wird eine gute Durchtränkung des Fasermaterials erreicht. Außerdem wird somit verhindert, dass das Fasermaterial nach Verlassen der Doppelbänder wieder expandiert. Dadurch kann auf das in dem vorhergehenden Prinzip beschriebene Leitblech verzichtet werden.

Beide Doppelbänder haben je ein erstes unteres Transportband und ein zweites oberes Transportband, wobei beide Bänder in Förderrichtung zum Extruder hin in einem spitzen Winkel aufeinander zu laufen und dadurch das zwischen den Transportbändern transportierte Gelege allmählich verdichtet wird. Die beiden Doppelbänder sind dabei so angeordnet, dass beide Doppelbänder jeweils zum Transport und zur Verdichtung je eines Geleges 10 dienen und beide Gelege einem Extruder zugeführt werden, wobei beide Doppelbänder jeweils mit ihren Kopfseiten, an denen der Spaltabstand zwischen den beiden Transportbändern eines Doppelbandes am geringsten ist, einander zugewandt sind.

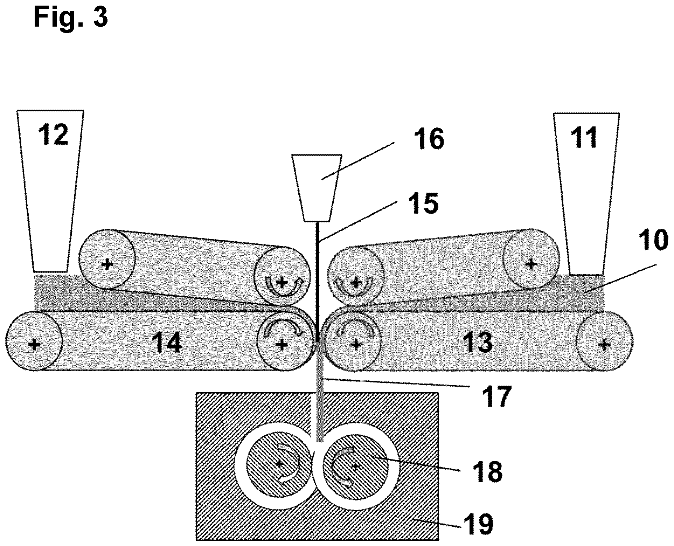

Figur 3 zeigt ein weiteres Ausführungsbeispiel mit zwei Doppelbändern in ähnlicher Anordnung wie zuvor anhand von Figur 2 beschrieben. Hier wird das gleiche Prinzip für die Dosierung von Fasermaterial an gegenläufigen Doppelschneckenextrudern eingesetzt. In diesem Fall wird dann das mit Polymerschmelze durchtränkte Fasermaterial zwischen den gegenläufigen Schnecken 18 des Extruders eingezogen.

Nachfolgend wird die vorliegende Erfindung anhand von zwei konkreten Beispielen mit exemplarisch angegebenen Parametern im Detail näher erläutert.

### Beispiel 1

Mit Hilfe eines volumetrischen Speisers wird ein Gelege aus recycelten Aramidfasern mit einer Feinheit von 1,7 dtex und einer mittleren Faserlänge von 40 mm auf einem Transportband abgelegt. Das Fasergelege hat eine Breite von 300 mm und eine Flächenmasse von 200 g/m². Dieses Gelege wird kontinuierlich mit einer Geschwindigkeit von 4 m/min mit einem weiteren Transportband auf eine Höhe von 8 mm verdichtet und einem gleichläufigen Doppelschneckenextruder mit 75 mm Schneckendurchmesser zugeführt. Gleichzeitig wird über einen Einschneckenextruder mit 80 mm Schneckendurchmesser und Breitschlitzdüse ein Polymerfilm aus geschmolzenem Polyamid in einer Breite von 300 mm in die Einzugszone des Doppelschneckenextruders gefördert. Die eingestellte Durchsatzleistung des Einschneckenextruders beträgt 35 kg/h. In dem Doppelschneckenextruder werden Fasern und Matrixmaterial homogen und faserschonend vermischt und anschließend als Plastifikat durch eine Düse ausgetragen. Der Plastifikatstrang wird durch eine geeignete Schneide abgelängt und die so erzeugten Zuschnitte mit Hilfe einer Presse zu Bauteilen verpresst.

### Beispiel 2

Mit einer Streueinrichtung wird ein Gelege aus Holzfasern mit einer mittleren Faserlänge von 5 mm erzeugt und auf einem Transportband in einer Breite von 300 mm abgelegt. Die Flächenmasse des Geleges beträgt 500 g/m². Das Gelege wird kontinuierlich mit einer Geschwindigkeit von 4 m/min zwischen 2 Transportbändern auf eine Höhe von 10 mm verdichtet und einem Doppelschneckenextruder mit 75 mm Schneckendurchmesser zugeführt. Gleichzeitig wird über einen Einschneckenextruder mit 80 mm Schneckendurchmesser und Breitschlitzdüse ein Polymerfilm aus geschmolzenem Polypropylen in einer Breite von 300 mm in die Einzugszone des Doppelschneckenextruders gefördert. Die eingestellte Durchsatzleistung des Einschneckenextruders beträgt 70 kg/h. In dem Doppelschneckenextruder werden Fasern und Matrixmaterial homogen vermischt und anschließend als Plastifikat durch eine Düse ausgetragen. Der Plastifikatstrang wird durch eine geeignete Schneide abgelängt und die so erzeugten Zuschnitte mit Hilfe einer Presse zu Bauteilen verpresst.

### Bezugszeichenliste Fig. 1

1 Gelege aus Fasermaterial
2 Transportband 1
3 Transportband 2
4 Leitblech
5 Breitschlitzdüse für Kunststoffschmelze
6 Kunststoffschmelze
7 Schnecken
8 Extrudergehäuse

### Bezugszeichenliste Fig. 2 und 3

10 Gelege aus Fasermaterial
11 und 12 Faserspeiser
13 und 14 Doppelbänder
15 Polymerschmelze
16 Breitschlitzdüse für Polymerschmelze
17 mit Schmelze getränkte Faserbahn
18 Schnecken
19 Extrudergehäuse

## Patentansprüche

1. Verfahren zur kontinuierlichen Dosierung von endlich langen textilen Fasermaterialien an Schneckenmaschinen, bei dem aus den Fasern ein Gelege mit einer definierten Flächenmasse und Legebreite erzeugt wird, welches auf einem ersten horizontal angeordneten Transportband abgelegt und kontinuierlich einem Extruder zugeführt wird, wobei das Gelege (1) mittels einer Anordnung umfassend mindestens zwei Transportbänder (2, 3), zwischen denen es durchläuft, auf eine definierte Dicke, die kleiner als die Dicke des Einzugsschlitzes am Extruder ist, verdichtet wird, wobei das Verdichten zwischen dem ersten horizontal angeordneten Transportband (2) und einem oberhalb dieses ersten Transportbandes mit einem Spaltabstand zu diesem und in einem spitzen Winkel zu diesem angeordneten zweiten Transportband (3) erfolgt, derart, dass sich der Spaltabstand zwischen beiden Transportbändern (2, 3) in Förderrichtung zum Einzugsschlitz des Extruders hin verjüngt **dadurch gekennzeichnet, dass** eine Polymerschmelze (6, 15) aus einer Schlitzdüse (5, 16) im Einzugsbereich des Extruders mit dem Gelege (1) zusammengeführt oder zwischen zwei Gelege (10) eingebracht wird, wobei das verdichtete Gelege (1) um wenigstens etwa 90 °umgelenkt und eine nachfolgende Relaxation bzw. Expansion der Faserschicht verhindert wird.

2. Verfahren nach Anspruch 1 **dadurch gekennzeichnet, dass** die Verdichtung des Geleges (1) auf eine Dicke kleiner oder gleich 20 mm, bevorzugt kleiner gleich 10 mm erfolgt.

3. Verfahren nach einem der Ansprüche 1 oder 2, **dadurch gekennzeichnet, dass** die Breite des Geleges (1) in einem Bereich von 100 bis 600 mm liegt.

4. Verfahren nach Anspruch 1, **dadurch gekennzeichnet, dass** die Flächenmasse des Geleges (1) in einem Bereich von 50 bis 5000 g/m² liegt.

5. Verfahren nach einem der Ansprüche 1 bis 4 **dadurch gekennzeichnet, dass** die Transportbänder (2, 3) eine raue Oberfläche zur Erhöhung der Reibung zwischen Fasergelege und Bandoberfläche haben.

6. Verfahren nach einem der Ansprüche 1 bis 5, **dadurch gekennzeichnet, dass** das Gelege (1) aus Naturfasern oder Chemiefasern und/oder anderen Faserstoffen auf organischer oder anorganischer Basis besteht.

7. Verfahren nach einem der Ansprüche 1 bis 5, **dadurch gekennzeichnet, dass** das Gelege (1) aus recycelten Naturfasem oder Chemiefasern und/oder anderen Faserstoffen auf organischer oder anorganischer Basis besteht.

8. Verfahren nach Anspruch 1, **dadurch gekennzeichnet**, das das Fasergelege (1) aus einer Mischung unterschiedlicher Fasern und auch pulverförmigen Bestandteilen besteht.

9. Vorrichtung zur kontinuierlichen Dosierung von endlich langen textilen Fasermaterialien an Schneckenmaschinen umfassend mindestens ein erstes horizontal angeordnetes Transportband, auf dessen Oberseite ein aus Fasern erzeugtes Gelege mit einer definierten Flächenmasse und Legebreite abgelegt wird, sowie umfassend weiterhin wenigstens ein zweites Transportband (3), welches oberhalb des ersten Transportbandes (2) mit einem Spaltabstand zu diesem und in einem spitzen Winkel zu diesem angeordnet ist, derart, dass sich der Spaltabstand zwischen beiden Transportbändern (2, 3) in Förderrichtung verjüngt und das zwischen beiden Transportbändern durchlaufende Gelege (1) durch die Transportbänder verdichtet wird, wobei die Vorrichtung weiterhin einen Extruder mit einem Einzugsschlitz umfasst, dem das Gelege kontinuierlich zugeführt wird und das Gelege (1) vor Erreichen des Einzugsschlitzes des Extruders verdichtet wird **dadurch gekennzeichnet, dass** die Vorrichtung eine Schlitzdüse (5, 16) für eine Polymerschmelze (6, 15) umfasst, welche im Einzugsbereich des Extruders mit dem Gelege (1) zusammengeführt oder zwischen zwei Gelege (10) eingebracht wird, wobei das erste horizontale untere Transportband (2) relativ zu dem Einzugsschlitz des Extruders derart angeordnet ist, dass das Gelege (1) vor oder bei dem Einzug in den Extruder eine Umlenkung von wenigstens etwa 90 ° erfährt.

10. Vorrichtung nach Anspruch 9 , **dadurch gekennzeichnet, dass** diese wenigstens zwei Anordnungen von jeweils Doppelbändern mit je einem ersten unteren Transportband (13, 14) und je einem zweiten oberen Transportband umfasst, wobei beide Anordnungen jeweils zum Transport und zur Verdichtung je eines Geleges (10) vorgesehen sind und beide Gelege einem Extruder zugeführt werden, wobei beide Doppelbänder jeweils mit ihren Kopfseiten, an denen der Spaltabstand zwischen den beiden Transportbändern eines Doppelbandes am geringsten ist, einander zugewandt sind.

11. Vorrichtung nach einem der Ansprüche 9 oder 10, **dadurch gekennzeichnet, dass** der Spaltabstand zwischen dem ersten und dem zweiten Transportband (2, 3) einstellbar und/oder die Geschwindigkeit der Transportbänder einstellbar ist.

12. Vorrichtung nach einem der Ansprüche 9 bis 11, **dadurch gekennzeichnet, dass** die Schmelzezufuhr über die Schlitzdüse regelbar ist.

## Claims

1. Method for the continuous dosage of textile fibres materials that are finite in length for extruders, wherein a fabric with defined surface dimensions and fold width is produced that is laid on a first horizontally arranged conveyor belt and is continuously fed into an extruder, where the fabric (1) is condensed by means of an arrangement comprising at least two conveyor belts (2, 3), between which ist goes through at a defined thickness smaller than the thickness of the feed slot on the extruder, whereby compression takes place between the first horizontally arranged conveyor belt (2) and one located above this first conveyor belt, having a gap distance to this and arranged at an acute angle to this second conveyor belt (3), so that the gap distance between two conveyor belts (2, 3) to the feed slot of the extruder tapers in the direction of travel, **characterized in that** a polymer melt (6, 15) from a slit nozzle (5, 16) is merged in the catchment area of the extruder with the fabric (1) or inserted between two fabrics (10), whereby the compressed fabric (1) is deflected by at least approximately 90°, thereby preventing a subsequent relaxation or expansion of the fibre layer.

2. Method according to Claim 1, **characterized in that** the compression of the fabric (1) takes place at a thickness of less than or equal to 20 mm, preferably small than or equal to 10 mm.

3. Method according to one of the Claims 1 or 2, **characterized in that** the width of the fabric (1) is within a range of 100 to 600 mm.

4. Method according to Claim 1, **characterized in that** the surface dimensions of the fabric (1) are within a range of 50 to 5000 g/m².

5. Method according to one of Claims 1 Lo 4, **characterized in that** the conveyor belts (2, 3) have a rough surface to increase friction between fibre fabrics and belt surface.

6. Method according to one of the Claims 1 to 5, **characterized in that** the fabric (1) consists of natural fibres or chemical fibres and/or other fibrous materials that are organically or inorganically based.

7. Method according to one of the Claims 1 to 5, **characterized in that** the fabric (1) consists of recycled natural fibres or chemical fibres and/or other fibrous materials that are organically or inorganically based.

8. Method according to Claim 1, **characterized in that** the fibre fabric (1) is made of a mixture of various fibres and also elements in powder form.

9. Apparatus for the continuous dosage of textile fibre materials that are finite in length on extruders comprising at least a first horizontally arranged conveyor belt, on the top surface of which a fabric made of fibres with defined surface dimensions and fold width are laird, as well as furthermore comprising at least one second conveyor belt (3), which is arranged above the first conveyor belt (2) with a gap distance to this and at an acute angle to this so that the gap distance between both conveyor belts tapers in the direction of travel and the fabric (1) running between both conveyor belts (2, 3) is compressed by the conveyor belts, whereby the apparatus furthermore comprises an extruder with a feed slot that the fabric is continually fed into and the fabric (1) is compressed before reaching the feed slot of the extruder, **characterized in that** the apparatus comprises a slit nozzle (5, 16) for a polymer melt (6, 15), which is merged with the fabric (1) in the catchment area of the extruder or is inserted between two fabrics (10), whereby the first horizontal lower conveyor belt (2) is arranged relative to the feed slot of the extruder so that the fabric (1) is deflected by at least approx. 90° prior to or while being fed into the extruder.

10. Apparatus according to Claim 9, **characterized in that** this comprises at least two arrangements, each having double belts, each having a first lower conveyor belt (13, 14) and each having a second top conveyor belt, whereby both arrangement are each provided for the transport and compression for each fabric (10) and both fabrics axe fed into an extruder, whereby both double belts along with each of their head ends face each other where the gap distance between both conveyor belts of a double belt is the least.

11. Apparatus according to one of the Claims of 9 or 10, **characterized in that** the gap distance between the first and the second conveyor belt (2, 3) can be set and/or the speed of the conveyor can be adjusted.

12. Apparatus according to one of Claims 9 to 11, **characterized in that** the melt feed can be regulated via the slit nozzle.

## Revendications

1. Procédé destiné au dosage continu de matières texitles fibreuses à longueur sans fin sur des machines à vis sans fin, lors duquel on créé à partir des fibres une nappe présentant un grammage et une largeur de dépose définis, que l'on dépose sur une bande de transport placée à l'horizontale et que l'on amène vers une extrudeuse, lors duquel on compacte à nappe (1) au moyen d'un agencement comprenant au moins deux bandes de transport (2, 3), entre lesquelles elle passe à une épaisseur définie qui est inférieure à l'épaisseur de la fente d'entrée sur l'extrudeuse, le compactage s'effectuant entre la bande de transport (2) placée à l'horizontale et une deuxième bande de transport (3) placée au-dessus de ladite première bande de transport avec un interstice par rapport à cette dernière et sous un angle aigu par rapport à celle-ci, de telle sorte que l'interstice entre les deux bandes de transport (2, 3) rétrécisse, dans la direction de transport, vers la fente d'entrée des extrudeuses, **caractérisé en ce que** dans la zone d'entrée de l'extrudeuse, on rassemble une masse fondue polymère (6, 15) sortant d'une filière à fente (5, 16) avec la nappe (1) ou on l'introduit ente deux nappes (10), sachant qu'on retourne la nappe (1) compactée d'au moins approximativement 90 ° et qu'on empêche une relaxation, voire une expanson consécutive de la couche de fibres.

2. Procédé selon la revendication 1 **caractérise en ce que** le compactage de la nappe (1) s'effectue à une épaisseur inférieure ou égale à 20 mm, de préférence inférieure à 10 mm.

3. Procédé selon l'une quelconque des revendications 1 ou 2, **caractérisé en ce que** la largeur de la nappe (1) se situe dans un ordre de 100 à 600 mm.

4. Procédé selon la revendication 1, **caractérisé en ce que** le grammage de la nappe (1) se situe dans un ordre de 50 à 5000 g/m².

5. Procédé selon l'une quelconque des revendications 1 à 4 **caractérisé en ce que** les bandes de transport (2, 3) ont une surface rugueuse, pour augmenter le frottement entre la nappe de fibres et la surface de la bande.

6. Procédé selon l'une quelconque des revendication 1 à 5, **caractérisé en ce que** la nappe (1) est constituée de fibres naturelles, de fibres chimiques et/ou d'autres substances fibreuses sur base organique ou anorganique.

7. Procédé selon l'une quelconque des revendications 1 à 5, **caractérisé en ce que** la nappe (1) est constituée de fibres naturelles ou fibres chimiques recyclées et/ou autres substances fibreuses sur base organique ou anorganique recyclées.

8. Procédé selon la revendication 1, **caractérisé en ce que** la nappe de fibres (1) est constituée d'un mélange de différentes fibres et également de composants pulvérulents.

9. Dispositif destiné au dosage continu de matières textiles fibreuses à longueur sans fin sur des machinés à vis sans fin, comprenant au moins une bande de transport placée à l'horizontale, sur la face supérieure de laquelle on dépose une nappe créée à partir de fibres présentant un grammage et une largeur de dépose définis et comprenant en outre au moins une deuxième bande de transport (3), laquelle est placée au-dessus de ladite première bande de transport (2), avec un interstice par rapport à cette dernière et sous un angle aigu par rapport à celle-ci, de belle sorte que l'interstice entre les deux bandes de transport (2, 3) rétrécisse dans la direction de transport et que la nappe (1) passant à travers les deux bandes de transport soit compactée par les bandes de transport, le Dispositif comprenant par ailleurs un extrudeuse avec une fente d'entrée vers laquelle la nappe est alimentée en continu et compactée avant l'atteinte de le fente d'entrée de l'extrudeuse, **caractérisé en ce que** le dispositif comprend une filière à fente (5, 16) pour une masse fondue polymère (6, 15) qui est rassemblée dans la zone d'entrée de l'extrudeuse avec la nappe (1) ou introduite entre deux nappes (10), la première bande de transport (2) horizontale intérieure étant placée par rapport à la fente d'entrée de l'extrudeuse de telle sorte qu'avant ou pendant, son entrée dans l'extrudeuse, la nappe (1) effectue un retournement d'au moins 90 °.

10. Dispositif selon la revendication 9, **caractérisé en ce que** celui-ci comprend au moins deux agencement de chaque fois des doubles bandes avec chacun une première bande de transport (13, 14) inférieure et chacun une deuxième bande de transport supérieure, les deux agencement étant prévus chaque fois pour le transport et pour le compactage de chaque fois une nappe (10) et les deux nappes étant alimentées vers une extrudeuse, chaque fois par leurs côtés de tête sur lesquels l'interstice entre les deux bandes de transport d'une double bande est le plus petit, les deux doubles bandes étant dirigées l'une vers l'autre,

11. Dispositif selon l'une quelconque des revendications 9 ou 10, **caractérise en ce que** l'interstice entre la première et la deuxième bandes de transport (2, 3) est réglable et/ou **en ce que** la vitesse des bandes de transport est réglable.

12. Dispositif selon l'une quelconque des revendication 9 à 11, **caractérisé en ce que** l'alimentation de la masse fondue est régulable par l'intermédiaire de la filière à fente.
